# EUROPÄISCHE PATENTSCHRIFT

(11) **EP 2 488 577 B1**
(45) Veröffentlichungstag und Bekanntmachung des Hinweises auf die Patenterteilung: **14.08.2013**
(21) Anmeldenummer: 10771065.9
(22) Anmeldetag: 11.10.2010
(51) Int. Cl.: C08K 3/04, C01B 31/02, B32B 9/00

(54) **VERBUNDMATERIALIEN MIT GRAPHENLAGEN UND DEREN HERSTELLUNG UND VERWENDUNG**
COMPOSITE MATERIALS HAVING GRAPHENE LAYERS AND PRODUCTION AND USE THEREOF
MATÉRIAUX COMPOSITES AVEC DES COUCHES DE GRAPHÈNE ET LEUR FABRICATION ET UTILISATION

(30) Priorität: 15.10.2009 DE 102009049379
(43) Veröffentlichungstag der Anmeldung: 22.08.2012
(73) Patentinhaber: Bayer Intellectual Property GmbH, 40789 Monheim (DE)
(72) Erfinder: WOLF, Aurel, 42489 Wülfrath (DE); LOLLI, Giulio, 51061 Köln (DE); MLECZKO, Leslaw, 41542 Dormagen (DE); SCHLÜTER, Oliver Felix-Karl, 51381 Leverkusen (DE)
(74) Vertreter: BIP Patents
(86) Internationale Anmeldenummer: PCT/EP2010/065190
(87) Internationale Veröffentlichungsnummer: WO 2011/045269

(56) Entgegenhaltungen:
- WO-A2-2008/097343
- US-A1- 2008 017 507

## Beschreibung

Die vorliegende Erfindung betrifft Verbundmaterialien mit Graphenlagen sowie Verfahren zur Herstellung dieser Verbundmaterialien. Ein weiterer Gegenstand der Erfindung bezieht sich auf ein Verfahren zur Herstellung von Graphenlagen unter Verwendung der erfindungsgemäßen Verbundmaterialien.

Graphene sind zweidimensionale Kohlenstoffkristalle, die analog zu einzelnen Graphitschichten aufgebaut sind. Die Kohlenstoffatome sind in einer hexagonalen Honigwaben-Struktur angeordnet. Diese Anordnung resultiert aus der Hybridisierung ("Verschmelzung") der 2s-, 2px- und 2py-Orbitale der beteiligten Kohlenstoffatome zu sogenannten sp²- Hybridorbitalen. Graphen hat metallische und nichtmetallische Eigenschaften. Metallische Eigenschaften von Graphen sind die gute elektrische und thermische Leitfähigkeit. Die nichtmetallischen Eigenschaften bewirken eine hohe thermische Beständigkeit, chemische Trägheit und Schmierfähigkeit dieser Verbindungen. Eine Möglichkeit diese Eigenschaften technischen Applikationen zugänglich zu machen ist es, Graphen in Verbundmaterialien zu integrieren. Die Herstellung solcher Verbundmaterialien macht es nicht nur notwendig, dass Graphen in ausreichender Menge hergestellt wird, sondern auch, dass das Material, homogen verteilt in andere Materialien eingebracht werden kann.

Stankovich et al. [Nature, Vol. 442, July 2006] beschreibt die Herstellung eines Graphen Verbundmaterials durch Exfoliation von Graphit und die Dispergierung von einzelnen, chemisch modifizierten Graphenlagen in Polystyrol.

US2007/0158618A1 beschreibt die Herstellung von Graphen Nanoverbundmaterialien durch Exfoliation von Graphit und Verkleinerung des daraus resultierenden Materials mit einer Kugelmühle und anschließender Vermischung dieser Graphenlagen mit Polymeren.

US2007/0092716A1 offenbart die Herstellung eines Graphen Verbundmaterials bei dem Nanographenlagen zusammen mit polymerem Material vermischt und beispielsweise in Form von Fasern extrudiert werden.

Ein Nachteil der bekannten Verfahren zur Herstellung von Graphen Verbundmaterialien ist insbesondere die Schwierigkeit die Dicke der Graphenlagen im Verbundmaterial genau einstellen zu können und Graphenlagen zu integrieren, die eine Dicke von deutlich unter 20 nm aufweisen. Diese Schwierigkeit ist damit verbunden, dass zum einen die verwendeten Graphenlagen vor der Entstehung des Verbundmaterials während des Herstellprozesses teilweise aggregieren können, zum anderen aber auch, weil es mit den bekannten Verfahren zur Herstellung von Graphenlagen (wie beispielsweise der mechanischen oder der chemischen Exfolationsmethoden) nur sehr schwer möglich ist, Graphenlagen mit einer Dicke von deutlich unter 20 nm herstellen zu können.

Graphenlagen mit einer Dicke von deutlich unter 20 nm haben im Zusammenhang mit Ihrer Verwendung in einem Verbundmaterial gegenüber Graphenlagen mit einer Dicke von um die 20 nm beispielsweise jedoch den Vorteil, dass die Perkolationsschwelle (Stoffkonzentration bei der es unmittelbar zu einer Reduktion des elektrischen Widerstands innerhalb des Verbundmaterials kommt) deutlich erniedrigt wird. Im Falle der Verwendung von einzelnen Graphenlagen (0,335 nm) liegt die Perkolationsschwelle bei weniger als 0,1 Gew.% [Stankovich et al. Nature, Vol. 442, July 2006]. Im Vergleich dazu sind bei der Verwendung von Graphenlagen mit einer Dicke von um die 20 nm Perkolationsschwellenwerte von 3-5 Gew.% beschrieben worden.

Die vorliegende Erfindung adressiert die Nachteile des Standes der Technik und beinhaltet die Aufgabe, Verbundmaterialien mit Graphenlagen, die eine Dicke von deutlich unter 20 nm aufweisen, bereitzustellen.

Eine weitere Aufgabe der vorliegenden Erfindung ist es, an sich bekannte Füllstoffe wie Schichtsilikate oder Schichtdoppelhydroxide, die keine elektrische oder thermische Leitfähigkeit aufweisen, mit solchen Eigenschaften auszustatten.

Die Aufgaben werden durch die Bereitstellung eines Verbundmaterials aus Schichtsilikat oder Schichtdoppelhydroxiden und zumindest teilweise zu Graphenlagen zersetztem Polyacrylnitril mit einem relativen Stickstoffmasseanteil von weniger als 20% bezogen auf die relative Molekülmasse von Polyacrylnitril gelöst.

Neben der Bereitstellung von einem Verbundmaterial, welches Graphenlagen mit einer Dicke von deutlich weniger als 20 nm enthält, kombiniert das erfindungsgemäße Verbundmaterial auch die Vorteile von Graphenlagen (mechanische und elektrische Leitfähigkeit) mit den vorteilhaften Eigenschaften von Schichtsilikaten oder Schichtdoppelhydroxiden (Isolation- und Füllstofffunktionalität) in einem Material. Die erfindungsgemäßen Verbundmaterialien bieten darüber hinaus den Vorteil, dass die Beschaffenheit des Materials ähnlich zu denjenigen von Schichtsilikaten oder Schichtdoppelhydroxiden ist, was bedeutet, dass die erfindungsgemäßen Verbundmaterialien auch für bekannte Prozesse und Methoden verwendet werden können, bei denen bereits Schichtsilikate oder Schichtdoppelhydroxide als Ausgangsstoffe verwendet werden.

Die erfindungsgemäß verwendbaren Schichtsilikate sind die aus dem Stand der Technik bekannten Silikatstrukturen mit zweidimensionalen Schichten aus SiO₄-Tetraedern (auch als Blatt- oder

Phyllosilikate bezeichnet). Beispiele für geeignete Schichtsilikate sind Bentonit, Talk, Pyrophyllit, Glimmer, Serpentin, Kaolinit oder Gemische davon. Die Schichtsilikate können nach bekannten Methoden modifiziert werden um den Schichtabstand zu ändern. Dafür werden beispielsweise zwischen den Schichten Ammoniumverbindungen, die mindestens eine Säuregruppe aufweisen, eingelagert [DE10351268A1]. Die Einlagerung erfolgt durch Austausch der im Schichtgitter der Silikate enthaltenen Kationen durch die Ammoniumverbindungen mit mindestens einer Säuregruppe und führt im allgemeinen zu einer Aufweitung des Schichtabstands. Schichtsilikate, bzw. die nach dem oben beschriebenen Verfahren modifizierten Schichtsilikate, haben vorzugsweise einen Schichtabstand von 0,5 bis 2,5 nm und noch bevorzugter von 0,7 bis 1,5 nm.

Unter Schichtdoppelhydroxiden (layered double hydroxides, LDH) werden Verbindungen verstanden, die unter die allgemeine Formel [Mz⁺ᵢ₋ₓN³⁺ₓ(OH)₂][Aⁿ⁻]_{x/n} · y H₂O fallen. Dabei ist M²⁺ ein zweiwertiges Erdalkali- oder Übergangsmetallion wie Mg²⁺, Ni²⁺, Cu²⁺ oder Zn⁷⁺, N³⁺ ein dreiwertiges Hauptgruppen- oder Übergangsmetallion wie z.B. Al³⁺, Cr³⁺, Fe³⁺ oder Ga³⁺, Aⁿ⁻ ein Anion wie z.B. NO₃⁻, CO₃²⁻, Cl⁻ oder SO₄²⁻, x eine rationale Zahl zwischen 0 und 1 und y eine positive Zahl einschließlich 0. Erfindungsgemäß sind unter dem Begriff "Schichtdoppelhydroxide" auch die Oxide dieser Verbindungen miterfasst. Erfindungsgemäß bevorzugt werden als Schichtdoppelhydroxide natürliche und synthetische Hydrotalcite und Verbindungen mit einer Hydrotalcit-ähnlichen Struktur (Hydrotalcite-like compounds, HTLC) verwendet. Zur Herstellung der Hydrotalcite bzw. der Verbindungen mit einer Hydrotalcit-ähnlichen Struktur kann dabei grundsätzlich jedes dem Fachmann geläufige Verfahren eingesetzt werden [siehe beispielsweise in der vorstehenden Literaturstelle beschrieben: DE 2061114A, US 5,399,329A, US 5,578,286A, DE 10119233, WO 0112570, Handbook of Clay Science, F. Bergaya, B.K.G. Theng and G. Lagaly, Developments in Clay Science, Vol. 1, Chapter 13.1, Layered Double Hydroxides, C. Forano, T. Hibino, F. Leroux, C. Taviot-Gueho, Handbook of Clay Science, 2006].

Erfindungsgemäß bevorzugt ist die Verwendung eines Hydrotalcits der allgemeinen (nominellen) Formel M₂ₓ²⁺ M₂³⁺(OH)₄ₓ₊₄ · A_{2/n}ⁿ⁻ · zH₂O, bei der M₂ₓ²⁺ ein divalentes Metal ausgewählt aus der Gruppe von Mg, Zn, Cu, Ni, Co, Mn, Ca und/oder Fe ist. M₂³⁺ beschreibt ein geeignetes trivalentes Metall ausgewählt aus der Gruppe von Al, Fe, Co, Mn, La, Ce und/oder Cr. "x" ist eine Zahl von 0,5 bis 10 in Intervallen von 0,5. A ist ein interstitielles Anion. Es eignen sich organische Anionen wie Alkoholate, Alkylethersulfate, Arylethersulfate und/oder Glycolethersulfate oder anorganische Anionen, wie beispielsweise Carbonate, Hydrogencarbonate, Nitrate, Chloride, Sulfate, B(OH)₄⁻ und/oder Polyoxometallationen wie Mo₇O₂₄⁶⁻ oder V₁₀O₂₈⁶⁻. Besonders bevorzugt ist die Verwendung von CO₃²⁻ und NO₃⁻. "n" in der oben genannten allgemeinen Formel bezeichnet die Ladung des interstitiellen Anions, welche bis 8 und normalerweise bis 4 betragen kann. "z" ist ein Integer von 1 bis 6, vorzugsweise 2 bis 4. Das korrespondierende Metalloxid, welches durch Kalzinieren erhalten werden kann und im erfindungsgemäßen Verbundmaterial vorliegt, hat die allgemeine Formel M₂ₓ²⁺ M₂³⁺(O)_{(4x+4)/2}, wobei M₂ₓ²⁺,M₂³⁺ und "x" die gleiche Bedeutung zukommt wie oben beschrieben. Dem Fachmann ist bekannt, dass solche Materialien insbesondere bei Kontakt mit Wasser in einer partiell hydroxylierten Form vorliegen können. Die in diesem Abschnitt beschriebenen erfindungsgemäß bevorzugten Hydrotalcite und deren Herstellung sind beispielsweise in der US 6,514,473B2 beschrieben worden.

Erfindungsgemäß bevorzugt verwendet werden Schichtdoppelhydroxide und besonders bevorzugt Hydrotalcite mit einem Schichtabstand von 0,5 bis 2,5 nm und vorzugsweise von 0,7 bis 1,5 nm. Der Schichtabstand kann künstlich wie bei den Schichtsilikaten vergrößert werden, indem man geeignete interkalierende Agenzien einsetzt. Prinzipiell eignen sich dafür Anionen wie beispielsweise 3-Aminobenzolsulfonsäure, 4-Toluolsulfonsäure-Monohydrat, 4-Hydroxybenzolsulfonsäure, Dodecylsulfonsäure, Terephthalsäure [Zammarano et al., Polymer Vol. 46, 2005, S. 9314-28; US 4,774,212]. Andere Anionen sind dem Fachmann geläufig. Für die Zwecke der vorliegenden Verbindung ist es nicht entscheidend, was für Anionen eingesetzt werden. Die Anionen dienen ausschließlich der Modifizierung der Schichten der Schichtdoppelhydroxide. Sie zersetzen sich während des Herstellprozesses der erfindungsgemäßen Verbundmaterialien bei der thermischen Behandlung.

Besonders geeignete Hydrotalcite werden von der Firma Sasol Deutschland GmbH unter dem Markennamen Pural vertrieben.

In den Schichten des Schichtsilikats oder der Schichtdoppelhydroxide befinden sich erfindungsgemäß hauptsächlich Graphenlagen, welche durch Polymerisation und Kalzinierung von Acrylnitril während dem Herstellungsprozesses des Verbundmaterials entstehen.

US 4,921,681 offenbart als Zwischenprodukt zur Herstellung von Hoch-Orientiertem Pyrolytischem Graphit (HOPG) ein Verbundmaterial mit Montmorillonite (ein Schichtsilikat) und teilsweise karbonisiertem Polyacrylnitril. In Beispiel 1 wird für 3 Stunden bei 700°C karbonisiert. Gemäß dem Stand der Technik [Peter Morgan, Carbon fibers and their composites; Vol. 27; CRC Pres, 2005; S. 2235] hat ein solches Zwischenprodukt einen relativen Stickstoffmasseanteil von mindestens 20% bezogen auf die relative Molekülmasse von Polyacrylnitril. Der relative Stickstoffmasseanteil von Polyacrylnitril (d.h. dem Ausgangsmaterial) liegt bei 26%. Das erfindungsgemäß beanspruchte Verbundmaterial unterscheidet sich dadurch, dass der relative Stickstoffmasseanteil weniger als 20%, vorzugsweise weniger als 15%, noch bevorzugter gleich oder weniger als 10%, noch bevorzugter gleich oder weniger als 5% und noch bevorzugter gleich oder weniger als 3% bezogen auf die relative Molekülmasse von Polyacrylnitril ausmacht. Das erfindungsgemäße stickstoffhaltige Material hat dabei keine HOPG Struktur, sondern betrifft vielmehr Graphenlagen-Strukturen mit einer Schichtdicke von 0,5 bis 2,5 nm. Die Berechnung des Stickstoffmassenanteils kann durch die bekannte und etablierte Standardmethode ICP-MS (Massenspektrometrie mit induktiv gekoppeltem Plasma) beispielsweise von einem nach DIN-ISO 17025 zertifizierten Analytiklabor durchgeführt werden.

Bei der ausschließlichen Verwendung eines Schichtdoppelhydroxides für das erfindungsgemäße Verbundmaterial kann der relative Stickstoffmasseanteil bezogen auf die relative Molekülmasse von Polyacrylnitril jedoch 20% oder auch mehr als 20% betragen. Die oben genannten, bevorzugten Werte für die relativen Stickstoffmassenanteile sind jedoch auch in diesem Fall bevorzugt.

Erfindungsgemäß wird die Reduktion des relativen Stickstoffanteils dadurch erreicht, indem die Kalzinierungstemperatur entsprechend erhöht wird. Um beispielsweise einen Stickstoffmasseanteil von gleich oder weniger als 10% zu erhalten, ist eine Kalzinierung bei 1000°C während mindestens 40 Minuten, vorzugsweise von mindestens 90 Minuten und noch bevorzugter von mindestens 2 Stunden in einem konventionellen Heizofen notwendig (unter Berücksichtigung der maximalen Beladungskapazität des Heizofens).

Der Begriff "zumindest teilweise zu Graphenlagen zersetztem Polyacrylnitril" beschreibt die Karbonisierung von Polyacrylnitril zu Graphenlagen durch den in dieser Anmeldung beschriebenen Kalzinierungsschritt. Je nach Temperatur und Dauer des Kalzinierungsschrittes ist aber das Polyacrylnitril unter Umständen nicht vollständig zersetzt bzw. karbonisiert, sondern es befindet sich noch Polyacrylnitril bzw. nur teilweise zersetztes Polyacrylnitril in dem erfindungsgemäßen Verbundmaterial. Die Temperatur hat dabei einen unmittelbaren Einfluss auf das Kohlenstoff-Stickstoff-Verhältnis. Die thermische Behandlung muss für eine bestimmte Zeit durchgeführt werden, damit möglichst alle abzuführenden Verbindungen über Diffusion nach außen (außerhalb des Verbundmaterials) geleitet werden können und sich die Verbindungen innerhalb des Verbundmaterials zu einem Gleichgewichtszustand umordnen können. Um dies zu gewährleisten, muss mindestens für eine Zeitdauer von 10 Minuten vorzugweise von mindestens 40 Minuten und noch bevorzugter von mindestens 90 Minuten in einem konventionellen Heizofen oder mindestens 5 Minuten und bevorzugter mindestens 45 Minuten in einem Mikrowellen-Heizofen kalziniert werden. Die maximale Beladungskapazität der Heizofen ist zu berücksichtigen und einzuhalten. Der Zersetzungsprozess von Polyacrylnitril zu Graphenlagen ist bekannt und beispielsweise durch Fitzer et al. beschrieben worden [Carbon Vol. 24, Issue 4, 1986, S. 387-395]. Abbauprodukte, die durch die Zersetzung von Polyacrylnitril entstehen, sind beispielsweise H₂, N₂, NH₃ und HCN.

Die Zersetzung von Polyacrylnitril zu Graphenlagen ist demnach im Wesentlichen abhängig von der gewählten Kalzinierungstemperatur. Eine bevorzugte Ausführungsform der Erfindung betrifft ein Verbundmaterial, bei dem sich das Polyacrylnitril zu 95%, bevorzugt zu 98%, noch bevorzugter 99% und ganz besonders bevorzugt vollständig zu Graphenlagen zersetzt hat. Dafür sind Temperaturen ab 1600°C erforderlich (mindestens 95%ige Zersetzung). Vollständige Zersetzung (d.h. mindestens 99%ige Zersetzung) erreicht man mit Temperaturen um die 2000°C. Der Kalzinierungsschritt wird vorzugsweise unter inerter Atmosphäre (Argon oder Stickstoff und vorzugsweise Ar) und bei Normaldruck durchgeführt.

Unter dem Begriff "Kalzinierung" wird erfindungsgemäß allgemein ein thermischer Behandlungsschritt verstanden, d.h. Erhitzen eines Materials mit dem Ziel, dieses zu zersetzen. Das Material, welches zu Graphenlagen zersetzt werden soll, ist erfindungsgemäß Polyacrylnitril.

Unter dem Begriff "Graphenlage" werden zweidimensionale Kohlenstoffkristalle verstanden, die analog zu einzelnen Graphitschichten aufgebaut sind und deren Kohlenstoffatome sich in einer hexagonalen Honigwaben-Struktur unter Bildung von sp²- Hybridorbitalen anordnen. Eine einzelne Graphenlage hat eine Schichtdicke von 0,335 nm. Bei einem Schichtabstand der Schichtsilikate oder Schichtdoppelhydroxide von vorzugsweise 0,5 bis 2,5 nm können sich demnach 1 bis 7 Graphenlagen innerhalb einer einzelnen Schicht befinden.

Die Herstellung von Polyacrylnitril aus Acrylnitril ist bekannt und beispielsweise im Zusammenhang mit der Synthese von Kohlenstofffasern ausführlich beschrieben worden [US 3,681,023; US 4,397,831].

Ein weiterer Gegenstand der Erfindung betrifft ein Verbundmaterial aus Schichtdoppelhydroxiden und vorzugsweise aus Hydrotalcit und/oder einer Verbindung mit Hydrotalcit ähnlicher Struktur und zumindest teilweise zu Graphenlagen zersetztem Polyacrylnitril.

Ein weiterer Erfindungsgegenstand bezieht sich auf ein Verfahren zur Herstellung von Verbundmaterialien mit Graphenlagen, bei dem in einem ersten Schritt Acrylnitril zu einem Schichtdoppelhydroxid oder Schichtsilikat dazugegeben wird, damit sich das Acrylnitril innerhalb der Schichtstruktur des Schichtdoppelhydroxids oder Schichtsilikats einlagern kann, in einem zweiten Schritt, in dem das Acrylnitril innerhalb der Schichtstruktur zu Polyacrylnitril polymerisiert wird und anschließend das Polyacrylnitril durch Kalzinierung zumindest teilweise zu Graphenlagen zersetzt wird, so dass ein Verbundmaterial mit einem relativen Stickstoffmasseanteil von weniger als 20% bezogen auf die relative Molekülmasse von Polyacrylnitril entsteht. Ein weiterer Erfindungsgegenstand betrifft ein Verfahren zur Herstellung von Verbundmaterialien mit Graphenlagen bei dem in einem ersten Schritt Acrylnitril zu einem Schichtdoppelhydroxid dazugegeben wird, damit sich das Acrylnitril innerhalb der Schichtstruktur des Schichtdoppelhydroxids einlagern kann, in einem zweiten Schritt das Acrylnitril innerhalb der Schichtstruktur zu Polyacrylnitril polymerisiert wird und anschließend das Polyacrylnitril durch Kalzinierung zumindest teilweise zu Graphenlagen zersetzt wird.

Bei den erfindungsgegenständlichen Herstellungsverfahren wird das Acrylnitril vorzugsweise tröpfchenweise zu dem Schichtdoppelhydroxid bzw. dem Schichtsilikat dazugegeben. Das Schichtdoppelhydroxid oder das Schichtsilikat liegt vorzugsweise als Pulver vor und wird vorzugsweise vor der Zugabe von Acrylnitril getrocknet, so dass möglichst wenig Feuchtigkeit vorliegt. Geeignete bevorzugte und besonders bevorzugte Schichtdoppelhydroxide bzw. Schichtsilikate sind oben in der Anmeldung näher beschrieben. Vorzugsweise werden für das Herstellverfahren Schichtdoppelhydroxide eingesetzt. Für den ersten Schritt des Herstellungsverfahrens können die Hydroxide oder die Oxide der Schichtdoppelhydroxide eingesetzt werden. Vorzugsweise werden die Oxide für das Herstellungsverfahren verwendet.

In einer bevorzugten Ausführungsform der Erfindung wird dem Acrylnitril vor der Zugabe zum Schichtdoppelhydroxid bzw. dem Schichtsilikat ein Polymerisationsinitiator dazugegeben, um die Polymerisation des Acrylnitril zu unterstützen. Geeignete Polymerisationsinitiatoren für Acrylnitril sind dem Fachmann bekannt. Beispiele für geeignete Polymerisationsinitiatoren sind Azoverbindungen, Peroxide und/oder Licht und hochenergetische Strahlen. Als Initiatoren kommen z.B. in Frage: tert.-Butylperoctoat, Benzoylperoxid, Dilauroylperoxid, tert.-Butylperpivalat, Azo-bis(isobutyronitril), Di-tert.-butylperoxi-3,3,5-trimethylcyclohexan, Di-tert.-butyl-peroxi-hexahydroterephthalat, 2,5-Dimethylhexan-2,5-diperbenzoat, t-Butyl-per-2-ethylhexanoat, Azo-bis(2,4-dimethylvaleronitril), 2,5-Dimethyl-2,5-di-(tert.-butylperoxid)-hexan, Dioctanoylperoxid, t-Butylperneodecanoat, Diisopropyl-peroxydicarbonat. Die Polymerisation kann auch durch Licht und Photoinitiatoren ausgelöst werden.

Das Mischverhältnis zwischen Acrylnitril und dem Schichtdoppelhydroxid bzw. Schichtsilikat wird vorzugsweise so gewählt, dass das Schichtdoppelhydroxid bzw. das Schichtsilikat vollständig mit dem Acrylnitril abgesättigt ist. Bei einem geeigneten Mischverhältnis und dem Einsatz von Schichtdoppelhydroxiden bzw. Schichtsilikaten als Pulver kann sich das Acrylnitril in die Schichtstruktur einlagern, wenn das Pulver komplett feucht ist.

In einem zweiten Herstellungsschritt wird nun das Acrylnitril innerhalb der Schichtstruktur des Schichtdoppelhydroxids bzw. des Schichtsilikats zu Polyacrylnitril polymerisiert. Die Polymerisation kann durch verschiedene dem Fachmann bekannte Verfahren initiiert werden. Beispielsweise kann die Polymerisation durch ionisierende Bestrahlung [US 3,681,023] gestartet werden. Beim Einsatz eines Polymerisationsinitiators wie beispielsweise Benzoylperoxid kann die Polymerisation von Acrylnitril durch dessen Zugabe und vorzugsweise durch leichtes Erhitzen auf Temperaturen von zwischen 50°C und 100°C und vorzugsweise unter oxidierenden Bedingungen begonnen und durchgeführt werden. Die Reaktion wird vorzugsweise über einen Zeitraum von 2 bis 3 Stunden durchgeführt. Ein weiterer Erfindungsgegenstand bezieht sich deshalb auf ein Verfahren zur Herstellung von Verbundmaterialien mit Graphenlagen bei dem Acrylnitril zusammen mit einem Polymerisationsinitiator zu einem Schichtdoppelhydroxid oder zu dem Schichtsilikat dazugegeben wird.

In einem dritten Herstellungsschritt wird nun das sich in den Schichten des Schichtdoppelhydroxids bzw. des Schichtsilikats befindliche, polymersierte Acrylnitril durch Kalzinierung zumindest teilweise zu Graphenlagen zersetzt bzw. karbonisiert. Dieser dritte Schritt umfasst zunächst die Stabilisierung des Polyacrylnitrils (d.h. Ringbildung und Vernetzung) und geschieht bei Temperaturen von 200 bis 500°C vorzugsweise unter oxidierenden Bedingungen und vorzugsweise schrittweise. Danach wird das vernetzte Polyacrylnitril zersetzt bzw. karbonisiert indem auf Temperaturen von mindestens 700°C (falls nur Schichtdoppelhydroxide für die Herstellung des erfindungsgemäßen Verbundmaterials verwendet werden), ansonsten bevorzugt von mindestens 800°C, bevorzugter von 900°C, besonders bevorzugt von 1000°C, und noch bevorzugter auf Temperaturen von 1600°C bis 2000°C und ganz besonders bevorzugt auf Temperaturen von 2000°C, vorzugsweise unter einem Inertgasstrom d.h. nicht-oxidierenden Bedingungen, erhitzt wird. Die Zeitdauer der Kalzinierung ist unter anderem abhängig von der zu kalzinierenden Menge. Vorzugweise wird für eine Zeitdauer von 10 Minuten vorzugweise von mindestens 40 Minuten und noch bevorzugter von mindestens 90 Minuten in einem konventionellen Heizofen oder mindestens 5 Minuten und bevorzugt mindestens 45 Minuten in einem Mikrowellen-Heizofen kalziniert.

Ein weiterer Erfindungsgegenstand ist gerichtet auf ein Verfahren zur Herstellung von Verbundmaterialien mit Graphenlagen, bei dem der Kalzinierungsschritt eine insbesondere schrittweise Temperaturerhöhung auf 200°C bis 500°C zur Stabilisierung des Polyacrylnitrils und eine anschließende Temperaturerhöhung auf mindestens 700°C (falls nur Schichtdoppelhydroxide eingesetzt werden) und vorzugsweise auf mindestens 800°C zur zumindest teilweisen Zersetzung von Polyacrylnitril zu Graphenlagen umfasst.

Ein weiterer Gegenstand der Erfindung ist gerichtet auf ein Verbundmaterial mit Graphenlagen, welches nach einem erfindungsgemäßen Verfahren zur Herstellung von Verbundmaterialien mit Graphenlagen hergestellt wurde.

Es hat sich darüber hinaus überraschenderweise gezeigt, dass sich die erfindungsgemäßen Verbundmaterialien auch dazu eignen, Graphenlagen von vorzugsweise 0,5 nm bis 2,5 nm (d.h. 1 bis 7 Graphenlagen) und noch bevorzugter von 0,7 nm bis 1,5 nm (d.h. 2 bis 4 Graphenlagen) herstellen zu können. Zu diesem Zweck wird das erfindungsgemäße Verbundmaterial mit einer Säure oder einer Lauge behandelt. Geeignete Säuren sind beispielsweise Fluorwasserstoffsäure, Chlorwasserstoffsäure, Salpetersäure oder Schwefelsäure. Geeignete Laugen sind beispielsweise Natronlauge, Kalilauge und Salze wie Ammoniumfluorid. Andere einsetzbare Säuren und Laugen sind dem Fachmann bekannt. Es können auch mehrere Säuren oder mehrere Laugen gleichzeitig oder nacheinander verwendet werden.

Dieses Herstellungsverfahren für Graphenlagen überwindet die bekannten Nachteile hinsichtlich der geringen Ausbeute von Graphen durch die bekannten Graphen-Herstellungsverfahren über Gasphasenabscheidung [Xianbao Wang et al., Chem. Vap. Deposition Vol. 15, 2009, S. 53-56]. Bei diesen bekannten Verfahren liegt die Ausbeute von Graphen beim Einsatz von einem Gramm Katalysator bei 0,1 1 Gramm. Dies ist im Vergleich zur Herstellung von Kohlenstoffröhrchen über Gasphasenabscheidung sehr gering, bei dem Ausbeuten von 200-300 Gramm Kohlenstoffröhrchen pro eingesetztem Gramm Katalysator erhalten werden. Durch das vorliegende Verfahren kann die Ausbeute gesteigert werden.

Ein weiterer Vorteil des erfindungsgemäßen Herstellungsverfahren für Graphenlagen sind die geringen Schichtdicken, die durch dieses Verfahren hergestellt werden können.

Die vorliegende Erfindung bezieht sich darüber hinaus auch auf die Verwendung eines erfindungsgemäßen Verbundmaterials zur Herstellung von Graphenlagen.

### Abbildungen:

Abbildung 1: Graphenlagen innerhalb der Schichtstruktur von dem Hydrotalcit-Material Pural MG 70. Die alternierenden Schichten aus Metalloxid (dunkel) und den Graphenlagen (heller) sind sichtbar.
Abbildung 2: Graphenlagen innerhalb der Schichtstruktur von dem Hydrotalcit-Material Pural MG 63.

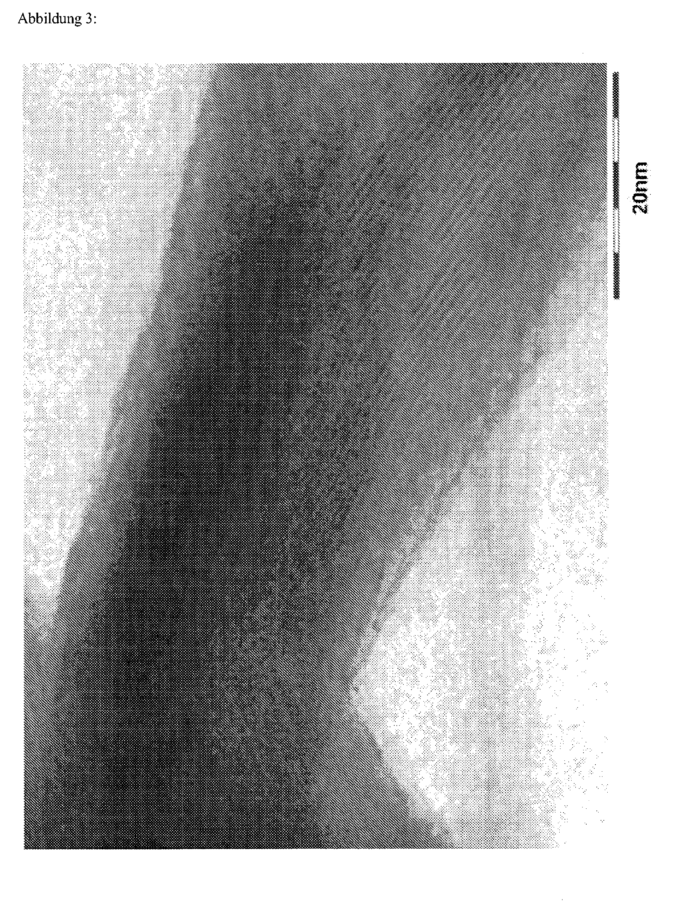

Abbildung 3: Pural MG70 Hydrotalcit-Material Ausgangsmaterial.

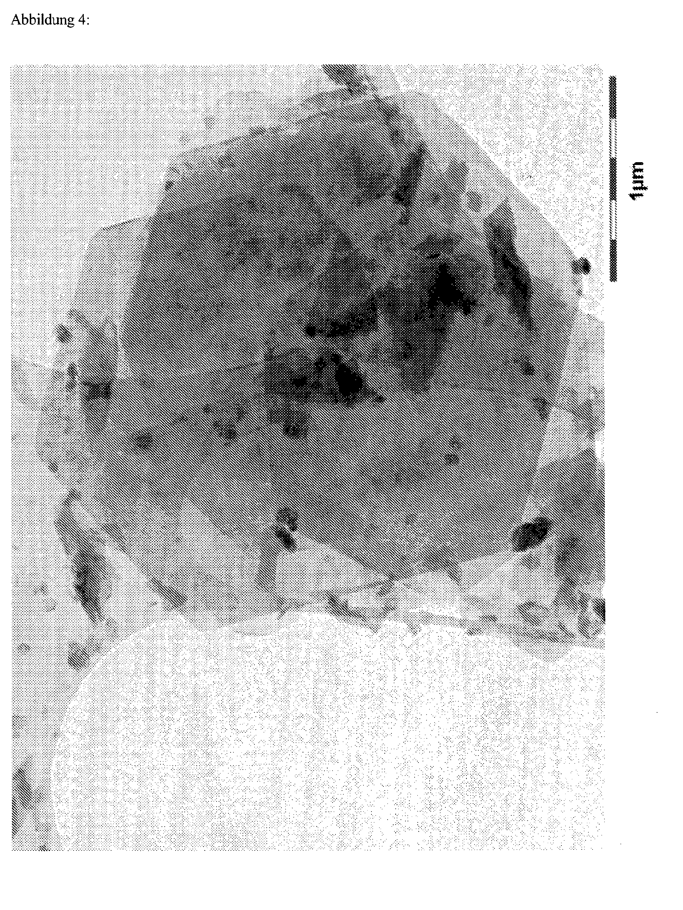

Abbildung 4: Die Abbildung zeigt einen vergrößerten Ausschnitt aus vorgenannter Abbildung 1.

### Beispiele

### Beispiel 1

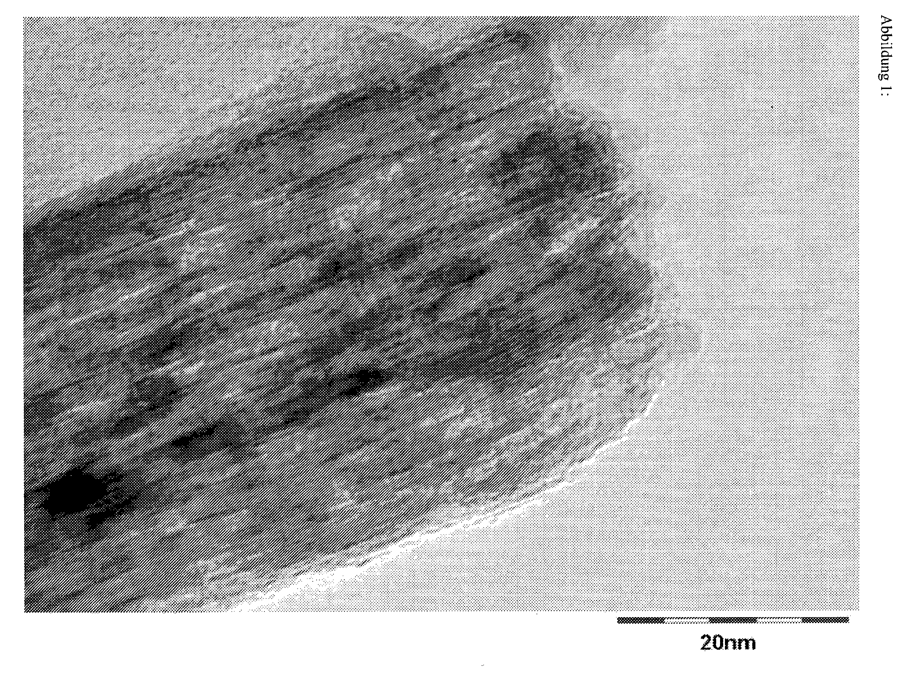

10 g Pural MG 70 Hydrotalcit von Sasol Deutschland GmbH wurden in einem Ofen bei 70°C getrocknet, um überschüssige Feuchtigkeit zu reduzieren. Dieses Hydrotalcit-Material hat eine nominelle chemische Zusammensetzung aus 70 Gew.% MgO and 30% Gew.% Al₂O₃, verpackt in einer Schichtstruktur mit 0.7 nm Abstand zwischen den einzelnen Schichten. 5 ml Acrylnitril wurden dann mit 10 mg Benzoylperoxid versetzt, wobei sich das Benzoylperoxid schnell aufgelöst hat. Diese Lösung wurde dann tropfenweise dem Hydrotalcit hinzugegeben und gerührt, bis eine homogene Mischung entstanden ist. Bei einem geeigneten Mischverhältnis von Flüssigkeit und Feststoff (in dem vorliegenden Experiment 0,5 ml Acrylnitril pro 1 g Hydrotalcit) resultiert ein "feuchtes" Pulver, bei dem sich das Acrylnitril in der Schichtstruktur des Hydrotalcit eingelagert hat. Dieses Pulver wird anschließend in einen geeigneten verschließbaren Behälter gegeben und in einem Ofen für 3 Stunden bei 70°C erhitzt. Das Acrylnitril polymerisiert zum Polyacrylnitril innerhalb der Schichten des Hydrotalcits-Supports. Der Polymerisationsinitiator baut sich während dieses Prozesses ab. Auf Grund der Polymerisation wechselt die Farbe des Materials von weiß zu einem blassen gelb. Danach wird die Lufttemperatur auf 300°C erwärmt. Während dieses Schritts wird das Polyacrylnitril vernetzt. Es bilden sich Ringe, die aromatischen Ringen gleichen. Dieser Schritt wird in der Terminologie der Kohlenstofffaserherstellung als Stabilisierung des Polyacrylnitrils bezeichnet. Das stabilisierte Polyacrylnitril /Hydrotalcit Verbundmaterial ist dunkelbraun. Im nachfolgenden Schritt wird nun das Polyacrylnitril in einem Quarzofen bei 1000°C unter Argonstrom karbonisiert. Das Material wird für zwei Stunden bei diesen Temperaturen belassen. Daraus resultiert ein Verbundmaterial aus Graphen und Hydrotalcit, welches auf Grund seines Kohlenstoffgehaltes dunkelgrau erscheint. Transmissionselektronenmikroskop-Bilder des Verbundmaterials (siehe Abbildung 1) zeigen bei geringerer Auflösung (oben links, kleines Bild) die hexagonalen Plättchenstrukturen, die typisch für das Hydrotalcit-Material sind und bei hoher Auflösung (unten rechts, großes Bild) die alternierenden Schichtstrukturen von dichtem Metalloxid (dunkle Gebiete) und weniger dichtem Graphen (helle Gebiete).

### Beispiel 2

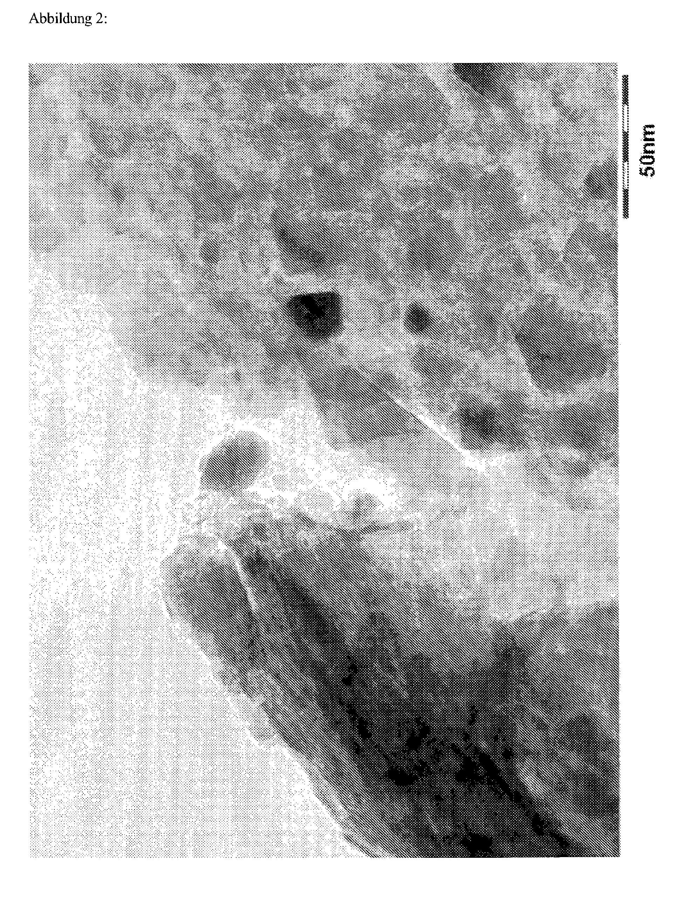

Es werden die gleichen Verfahrensschritte wie bei Beispiel 1 durchgeführt, mit der Ausnahme, dass als Hydrotalcit-Material Plural MG 63 ABSA mit einem Schichtabstand von 1,7 nm der Firma Sasol Deutschland GmbH eingesetzt wurde. Dieses Material besteht aus 63 Gew.% MgO und 37 Gew.% Al₂O₃. Um den Abstand zwischen den einzelnen Hydrotalcitschichten von 0.7 nm auf 1.7 nm zu erhöhen, wurde während der Herstellung des Hydrotalcits Meta-Aminobenzolsulfonsäure dazugegeben. Das nach der Karbonisierung erhaltene Material ist völlig schwarz, weil es im Vergleich zu dem in Beispiel 1 erhaltenen Material einen größeren Anteil von Kohlenstoff hat. Dies ist auf den deutlich größeren Schichtabstand des Hydrotalcit-Materials zurückzuführen, in den sich mehr Graphen einlagern kann. Das TEM-Bild der Abbildung 2 zeigt eine ähnliche Struktur wie die Abbildung 1.

## Patentansprüche

1. Verbundmaterial aus Schichtdoppelhydroxiden oder Schichtsilikat und zumindest teilweise zu Graphenlagen zersetztem Polyacrylnitril mit einem relativen Stickstoffmasseanteil von weniger als 20% bezogen auf die relative Molekülmasse von Polyacrylnitril.

2. Verbundmaterial aus Schichtdoppelhydroxiden und zumindest teilweise zu Graphenlagen zersetztem Polyacrylnitril.

3. Verbundmaterial nach Anspruch 1 oder 2, **dadurch gekennzeichnet, dass** das Verbundmaterial ein Schichtdoppelhydroxid umfasst, welches ausgewählt ist aus der Gruppe von Hydrotalcit und/oder aus Verbindungen mit einer Hydrotalcit ähnlichen Struktur.

4. Verbundmaterial nach Anspruch 3, **dadurch gekennzeichnet, dass** das Hydrotalcit die allgemeine Formel M₂ₓ²⁺ M₂³⁺(O)_{(4x+4)/2} hat, wobei M₂ₓ²⁺ ein divalentes Metall ausgewählt aus der Gruppe von Mg, Zn, Cu, Ni, Co, Mn, Ca und/oder Fe; M₂³⁺ ein trivalentes Metall ausgewählt aus der Gruppe von Al, Fe, Co, Mn, La, Ce und/oder Cr und x eine Zahl von 0,5 bis 10 in Intervallen von 0,5 entspricht.

5. Verbundmaterial nach einem der Ansprüche 2 bis 4, **dadurch gekennzeichnet, dass** bei den Schichtdoppelhydroxiden ein Schichtabstand von 0,5 bis 2,5 nm vorliegt.

6. Verfahren zur Herstellung von Verbundmaterialien mit Graphenlagen bei dem in einem ersten Schritt Acrylnitril zu einem Schichtdoppelhydroxid oder Schichtsilikat dazugegeben wird, in einem zweiten Schritt das Acrylnitril zu Polyacrylnitril polymerisiert wird und anschließend das Polyacrylnitril durch Kalzinierung zumindest teilweise zu Graphenlagen zersetzt wird, so dass ein Verbundmaterial mit einem relativen Stickstoffmasseanteil von weniger als 20% bezogen auf die relative Molekülmasse von Polyacrylnitril entsteht.

7. Verfahren zur Herstellung von Verbundmaterialien mit Graphenlagen bei dem in einem ersten Schritt Acrylnitril zu einem Schichtdoppelhydroxid dazugegeben wird, in einem zweiten Schritt das Acrylnitril zu Polyacrylnitril polymerisiert wird und anschließend das Polyacrylnitril durch Kalzinierung zumindest teilweise zu Graphenlagen zersetzt wird.

8. Verfahren zur Herstellung von Verbundmaterialien mit Graphenlagen nach Anspruch 6, **dadurch gekennzeichnet, dass** der Kalzinierungsschritt eine insbesondere schrittweise Temperaturerhöhung auf 200°C bis 500°C zur Stabilisierung des Polyacrylnitrils und eine anschließende Temperaturerhöhung auf mindestens 800°C zur zumindest teilweisen Zersetzung von Polyacrylnitril zu Graphenlagen umfasst.

9. Verfahren zur Herstellung von Verbundmaterialien mit Graphenlagen nach Anspruch 7, **dadurch gekennzeichnet, dass** der Kalzinierungsschritt eine insbesondere schrittweise Temperaturerhöhung auf 200°C bis 500°C zur Stabilisierung des Polyacrylnitrils und eine anschließende Temperaturerhöhung auf mindestens 700°C zur zumindest teilweisen Zersetzung von Polyacrylnitril zu Graphenlagen umfasst.

10. Verfahren zur Herstellung von Verbundmaterialien mit Graphenlagen nach einem der Ansprüche 6 bis 9, **dadurch gekennzeichnet, dass** Acrylnitril zusammen mit einem Polymerisationsinitiator zu einem Schichtdoppelhydroxid oder zu dem Schichtsilikat dazugegeben wird.

11. Verbundmaterial mit Graphenlagen, herstellbar nach einem Verfahren gemäß einem der Ansprüche 6 bis 10.

12. Verfahren zur Herstellung von Graphenlagen durch Säure- oder Laugebehandlung eines Verbundmaterials mit Graphenlagen gemäß einem der Ansprüche 1 bis 5 und/oder 11.

13. Verwendung eines Verbundmaterials mit Graphenlagen nach einem der Ansprüche 1 bis 5 und/oder 11 zur Herstellung von Graphenlagen.

## Claims

1. Composite of layered double hydroxides or sheet silicate and polyacrylonitrile which has been at least partially decomposed into graphene layers and has a relative proportion by mass of nitrogen of less than 20% based on the relative molecular mass of polyacrylonitrile.

2. Composite of layered double hydroxides and polyacrylonitrile which has been at least partially decomposed into graphene layers.

3. Composite according to Claim 1 or 2, **characterized in that** the composite comprises a layered double hydroxide selected from the group consisting of hydrotalcite and/or compounds having a hydrotalcite-like structure.

4. Composite according to Claim 3, **characterized in that** the hydrotalcite has the general formula M₂ₓ²⁺M₂³⁺(O)_{(4x+4)/2}, where M₂ₓ²⁺ is a divalent metal selected from the group consisting of Mg, Zn, Cu, Ni, Co, Mn, Ca and/or Fe; M₂³⁺ is a trivalent metal selected from the group consisting of Al, Fe, Co, Mn, La, Ce and/or Cr and x is a number from 0.5 to 10 in intervals of 0.5.

5. Composite according to any of Claims 2 to 4, **characterized in that** the layered double hydroxides have a layer spacing of from 0.5 to 2.5 nm.

6. Process for producing composites having graphene layers, in which acrylonitrile is added to a layered double hydroxide or sheet silicate in a first step, the acrylonitrile is polymerized to polyacrylonitrile in a second step and the polyacrylonitrile is subsequently at least partially decomposed into graphene layers by calcination so as to form a composite having a relative proportion by mass of nitrogen of less than 20% based on the relative molecular mass of polyacrylonitrile.

7. Process for producing composites having graphene layers, in which acrylonitrile is added to a layered double hydroxide in a first step, the acrylonitrile is polymerized to polyacrylonitrile in a second step and the polyacrylonitrile is subsequently at least partially decomposed into graphene layers by calcination.

8. Process for producing composites having graphene layers according to Claim 6, **characterized in that** the calcination step comprises a temperature increase, in particular a stepwise temperature increase, to from 200°C to 500°C to stabilize the polyacrylonitrile and a subsequent temperature increase to at least 800°C to at least partially decompose polyacrylonitrile into graphene layers.

9. Process for producing composites having graphene layers according to Claim 7, **characterized in that** the calcination step comprises a temperature increase, in particular a stepwise temperature increase, to from 200°C to 500°C to stabilize the polyacrylonitrile and a subsequent temperature increase to at least 700°C to at least partially decompose polyacrylonitrile into graphene layers.

10. Process for producing composites having graphene layers according to any of Claims 6 to 9, **characterized in that** acrylonitrile is added together with a polymerization initiator to a layered double hydroxide or to the sheet silicate.

11. Composite which has graphene layers and can be produced by a process according to any of Claims 6 to 10.

12. Process for producing graphene layers by acid or alkali treatment of a composite having graphene layers according to any of Claims 1 to 5 and/or 11.

13. Use of a composite having graphene layers according to any of Claims 1 to 5 and/or 11 for producing graphene layers.

## Revendications

1. Matériau composite à base d'hydroxydes doubles lamellaires ou de silicate lamellaire et de polyacrylonitrile au moins partiellement décomposé en feuilles de graphène, présentant une proportion massique d'azote relative inférieure à 20 % par rapport à la masse moléculaire relative de polyacrylonitrile.

2. Matériau composite à base d'hydroxydes doubles lamellaires et de polyacrylonitrile au moins partiellement décomposé en feuilles de graphène.

3. Matériau composite selon la revendication 1 ou 2, **caractérisé en ce que** le matériau composite comprend un hydroxyde double lamellaire qui est choisi dans le groupe constitué par l'hydrotalcite et/ou les composés présentant une structure semblable à l'hydrotalcite.

4. Matériau composite selon la revendication 3, **caractérisé en ce que** l'hydrotalcite a la formule générale M₂ₓ²⁺M₂³⁺(O)_{(4x+4)/2}, M₂ₓ²⁺ correspondant à un métal bivalent choisi dans le groupe constitué par Mg, Zn, Cu, Ni, Co, Mn, Ca et/ou Fe ; M₂³⁺ correspondant à un métal trivalent choisi dans le groupe constitué par Al, Fe, Co, Mn, La, Ce et/ou Cr et x correspondant à un nombre de 0,5 à 10 par intervalles de 0,5.

5. Matériau composite selon l'une quelconque des revendications 2 à 4, **caractérisé en ce qu'**un écart entre les lamelles de 0,5 à 2,5 nm est présent dans les hydroxydes doubles lamellaires.

6. Procédé de fabrication de matériaux composites comprenant des feuilles de graphène, selon lequel, lors d'une première étape, de l'acrylonitrile est ajouté à un hydroxyde double lamellaire ou un silicate lamellaire, lors d'une seconde étape, l'acrylonitrile est polymérisé en polyacrylonitrile, puis le polyacrylonitrile est décomposé au moins partiellement en feuilles de graphène par calcination, de manière à former un matériau composite présentant une proportion massique d'azote relative inférieure à 20 % par rapport à la masse moléculaire relative de polyacrylonitrile.

7. Procédé de fabrication de matériaux composites comprenant des feuilles de graphène, selon lequel, lors d'une première étape, de l'acrylonitrile est ajouté à un hydroxyde double lamellaire, lors d'une seconde étape, l'acrylonitrile est polymérisé en polyacrylonitrile, puis le polyacrylonitrile est décomposé au moins partiellement en feuilles de graphène par calcination.

8. Procédé de fabrication de matériaux composites comprenant des feuilles de graphène selon la revendication 6, **caractérisé en ce que** l'étape de calcination comprend une élévation de température particulièrement graduelle de 200 °C à 500 °C pour la stabilisation du polyacrylonitrile et une élévation de température ultérieure à au moins 800 °C pour la décomposition au moins partielle du polyacrylonitrile en feuilles de graphène.

9. Procédé de fabrication de matériaux composites comprenant des feuilles de graphène selon la revendication 7, **caractérisé en ce que** l'étape de calcination comprend une élévation de température particulièrement graduelle de 200 °C à 500 °C pour la stabilisation du polyacrylonitrile et une élévation de température ultérieure à au moins 700 °C pour la décomposition au moins partielle du polyacrylonitrile en feuilles de graphène.

10. Procédé de fabrication de matériaux composites comprenant des feuilles de graphène selon l'une quelconque des revendications 6 à 9, **caractérisé en ce que** l'acrylonitrile est ajouté à un hydroxyde double lamellaire ou au silicate lamellaire conjointement avec un initiateur de polymérisation.

11. Matériau composite comprenant des feuilles de graphène, pouvant être fabriqué par un procédé selon l'une quelconque des revendications 6 à 10.

12. Procédé de fabrication de feuilles de graphène par traitement acide ou basique d'un matériau composite comprenant des feuilles de graphène selon l'une quelconque des revendications 1 à 5 et/ou 11.

13. Utilisation d'un matériau composite comprenant des feuilles de graphène selon l'une quelconque des revendications 1 à 5 et/ou 11 pour la fabrication de feuilles de graphène.
